# FASCICULE DE BREVET EUROPEEN

(11) **EP 3 730 740 B1**
(45) Date de publication et mention de la délivrance du brevet: **06.07.2022**
(21) Numéro de dépôt: 20169774.5
(22) Date de dépôt: 16.04.2020
(51) Int. Cl.: F01D 5/14, F01D 9/02, F01D 9/06, F02C 7/22

(54) **CONDUIT POUR PIÈCE DE STATOR POUR TURBOMACHINE**
LEITUNG FÜR STATORTEIL FÜR TURBOTRIEBWERK
PIPE FOR A TURBINE ENGINE STATOR PART

(30) Priorité: 24.04.2019 FR 1904311
(43) Date de publication de la demande: 28.10.2020
(73) Titulaire: ArianeGroup SAS, 78130 Les Mureaux (FR)
(72) Inventeur: BRIAL, Alexandre, Michel, Stéphane, 27207 VERNON CEDEX (FR); LOISEAU, Cyril Bernard, 27207 VERNON CEDEX (FR); BOUFFLERT, Sébastien, 27207 VERNON CEDEX (FR)
(74) Mandataire: Cabinet Beau de Loménie

(56) Documents cités:
- EP-A1- 2 740 905
- DE-A1- 10 022 052
- DE-A1-102004 060 409
- FR-A1- 3 006 998
- FR-A1- 3 063 920

## Description

### Domaine technique

La présente invention concerne un conduit pour pièce de stator pour turbomachine, tel qu'une volute de sortie de pompe ou une volute d'entrée de turbine à gaz.

### Technique antérieure

Dans une turbomachine, des fluides doivent être transportés sous pression entre différents éléments de la turbomachine. Ces fluides (liquides ou gazeux) sous pression exercent des contraintes mécaniques relativement importantes sur les parois des conduits dans lesquels ils circulent.

Par ailleurs, les différents éléments de la turbomachine peuvent être à des températures différentes de sorte qu'il peut exister des contraintes thermiques dans les différents éléments, par exemple dans les conduits.

Des conduits présentant une section circulaire peuvent être obtenus par des procédés connus de mise en forme, par fonderie par exemple.

Des conduits peuvent également être fabriqués par un procédé de fabrication additive par fusion laser sur lit de poudre. Toutefois, la forme circulaire de la section du conduit n'est pas adaptée à un tel procédé de fabrication, notamment en raison de la dimension des conduits.

Aussi, la forme de la section du conduit a été adaptée au procédé de fabrication additive par fusion laser sur lit de poudre, par exemple en adoptant une section ayant une forme dite de « goutte ».

Cependant, cette forme de goutte peut s'avérer ne pas être satisfaisante pour tous les cas d'application.

DE10022052 décrit une turbine de turbocompresseur et EP2740905 décrit une turbomachine avec un bec de séparation de turbomachine axiale.

### Exposé de l'invention

La présente invention vise à remédier au moins en partie à ces inconvénients.

A cet effet, la présente invention concerne un conduit pour turbomachine selon la revendication 1.

On comprend que la section de la paroi interne du conduit est dépourvue d'angle vif.

En effet, lors de la circulation du fluide sous pression dans le conduit, le conduit se déforme et, lorsque la section comporte, sur la surface interne de la paroi, un ou plusieurs angle(s) vif(s), des concentrations de contraintes peuvent survenir. Ces concentrations de contraintes peuvent conduire à des sollicitations trop importantes du conduit et, à terme, à la rupture du conduit. On comprend que la température du fluide circulant dans le conduit peut également provoquer des dilatations thermiques du conduit et donc des concentrations de contraintes, notamment dans l'angle vif. Aussi, on parlera de manière générale de contraintes thermomécaniques subies par la paroi du conduit.

Grâce à l'arête interne du conduit dépourvue d'angle vif et présentant un rayon de courbure, et non un angle vif, supérieur ou égal à 0,5 mm, de préférence supérieur ou égal à 1 mm, la concentration des contraintes thermomécaniques lors de la déformation du conduit est réduite de sorte que les risques de rupture du conduit sont réduits. Par ailleurs, le rayon de courbure étant et inférieur ou égal à 5 mm, de préférence inférieur ou égal à 4 mm, le conduit peut être réalisé par fabrication additive par fusion laser sur lit de poudre. On comprend que le rayon de courbure est mesuré sur une surface de la paroi qui est interne au conduit.

Dans certains modes de réalisation, la paroi comprend une portion adjacente à l'arête interne présentant une épaisseur et une portion de paroi comprenant l'arête interne présente une épaisseur supérieure à l'épaisseur de la portion adjacente à l'arête interne.

On comprend que la portion de paroi comprenant l'arête interne est une portion de la paroi présentant le rayon de courbure R. De même, une portion adjacente à l'arête interne est une portion de paroi ne présentant pas le rayon de courbure R et contiguë à la portion de paroi comprenant l'arête interne.

Le conduit peut ainsi présenter une meilleure résistance aux contraintes thermomécaniques lors de la déformation tout en présentant une paroi dont la portion comprenant l'arête interne présente une épaisseur plus importante. On peut ainsi avantageusement réduire la masse du conduit en limitant l'épaisseur de la paroi du conduit dans des portions de la paroi qui subissent moins de sollicitations, par exemple des portions de la paroi qui sont adjacentes à l'arête.

Dans certains modes de réalisation, l'épaisseur de la portion de paroi comprenant l'arête interne est supérieure ou égale à 1,1 fois l'épaisseur de la portion adjacente à l'arête interne, de préférence supérieure ou égale à 1,5 fois l'épaisseur de la portion adjacente à l'arête interne.

Dans certains modes de réalisation, l'épaisseur de la portion de paroi comprenant l'arête interne est inférieure ou égale à 3 fois l'épaisseur de la portion adjacente à l'arête interne, de préférence inférieure ou égale à 2,5 fois l'épaisseur de la portion adjacente à l'arête interne.

Dans certains modes de réalisation, la largeur de paroi comprenant l'arête interne est inférieure ou égale 3,5 fois l'épaisseur de la portion de paroi comprenant l'arête interne, de préférence inférieure ou égale à 3 fois l'épaisseur de la portion de paroi comprenant l'arête interne.

Dans certains modes de réalisation, la paroi comprend deux portions adjacentes à l'arête interne, disposées de part et d'autre de l'arête interne, chaque portion comportant une face interne, les faces internes des deux portions adjacentes étant symétriques par rapport à l'arête interne.

Le conduit présente une symétrie partielle, au moins au niveau de l'arête interne et des portions de paroi adjacentes à l'arête interne, de sorte que l'écoulement du fluide dans le conduit génère moins de concentration de contraintes thermomécaniques que dans un conduit ne présentant pas de symétrie, même partielle.

Dans certains modes de réalisation, le conduit comprend deux arêtes internes opposées l'une à l'autre.

On peut ainsi avoir un conduit présentant une section plus symétrique qu'une section en forme de « goutte » par exemple.

Dans certains modes de réalisation, le conduit présente en section un axe de symétrie.

On comprend que la section peut présenter sensiblement une symétrie axiale. Cette symétrie axiale de la section de la paroi du conduit permet une répartition des contraintes plus homogène et réduit les risques de rupture du conduit.

L'axe de symétrie peut par exemple être confondu avec l'axe de symétrie des faces internes des portions adjacentes à l'arête interne.

Dans certains modes de réalisation, les portions adjacentes, en particulier les faces internes des portions adjacentes, forment avec un axe perpendiculaire à l'axe de symétrie un angle supérieur ou égal à 0° (degré), de préférence supérieur ou égal à 10°, de préférence supérieur ou égal à 20°, de préférence supérieur ou égal à 30, encore plus de préférence supérieur ou égal à 40° et inférieur ou égal à 50°, de préférence inférieur ou égal à 45°.

Dans certains modes de réalisation, les deux arêtes internes sont opposées l'une à l'autre par rapport à l'axe de symétrie.

Dans certains modes de réalisation, le conduit présente en section deux axes de symétrie.

De préférence, les deux axes de symétrie sont perpendiculaires entre eux.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue en coupe d'une section d'un conduit selon un premier mode de réalisation du conduit.
[Fig. 2] La figure 2 est une vue en coupe d'une section d'un conduit selon un deuxième mode de réalisation du conduit.
[Fig. 3] La figure 3 est une vue en coupe d'une section d'un conduit selon un troisième mode de réalisation du conduit.
[Fig. 4] La figure 4 est une vue en coupe d'une section d'un conduit selon un quatrième mode de réalisation du conduit.
[Fig. 5] La figure 5 est une vue en coupe d'une section d'un conduit selon un cinquième mode de réalisation du conduit.
[Fig. 6] La figure 6 est une vue en coupe d'une section d'un conduit selon un sixième mode de réalisation du conduit.
[Fig. 7] La figure 7 est une vue en coupe d'une section d'un conduit selon un septième mode de réalisation du conduit.
[Fig. 8] La figure 8 est une vue en coupe d'une section d'un conduit selon un huitième mode de réalisation du conduit.
[Fig. 9] La figure 9 est une vue en coupe d'une section d'un conduit selon un neuvième mode de réalisation du conduit.
[Fig. 10] La figure 10 est une vue en coupe d'une section d'un conduit selon un dixième mode de réalisation du conduit.
[Fig. 11] La figure 11 est une vue en coupe d'une section d'un conduit selon un onzième mode de réalisation du conduit.
[Fig. 12] La figure 12 est une vue en coupe d'une section d'un conduit selon un douzième mode de réalisation du conduit.
[Fig. 13] La figure 13 est une vue en coupe d'une section d'un conduit selon un treizième mode de réalisation du conduit.
[Fig. 14] La figure 14 est une vue en coupe d'une section d'un conduit selon un quatorzième mode de réalisation du conduit.

Sur l'ensemble des figures, les éléments en commun sont repérés par des références numériques identiques.

### Description détaillée

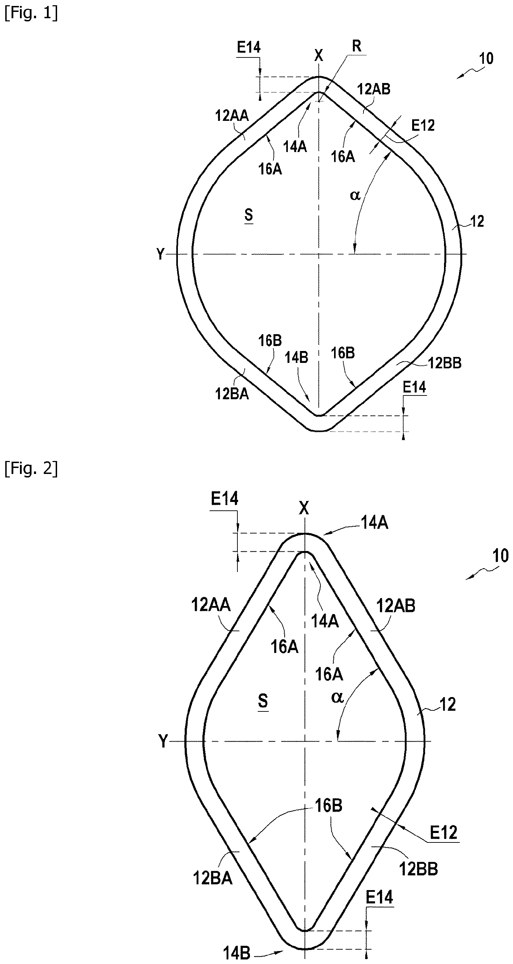

La figure 1 représente un conduit 10 pour pièce pour turbomachine, en particulier une pièce de stator pour turbomachine, tel qu'une volute de sortie de pompe ou une volute d'entrée de turbine à gaz.

Dans le mode de réalisation de la figure 1, le conduit 10 comprend une paroi 12 qui présente en section une section interne S et deux arêtes internes, une première arête interne 14A et une deuxième arête interne 14B. Chaque arête interne 14A, 14B présente un rayon de courbure R qui est supérieur ou égal à 0,5 mm, de préférence supérieur ou égal à 1 mm et inférieur ou égal à 5 mm, de préférence inférieur ou égal à 4 mm. Par exemple, dans le mode de réalisation de la figure 1, le rayon de courbure R est égal à 2 mm. Le rayon de courbure R de chaque arête interne 14A, 14B est mesuré sur une surface interne au conduit 10.

Dans le mode de réalisation de la figure 1, la paroi 12, en particulier la section interne S, comprend deux axes de symétrie, un premier axe de symétrie X et un deuxième axe de symétrie Y qui sont perpendiculaires l'un à l'autre.

Dans le mode de réalisation de la figure 1, la première arête interne 14A est opposée à la deuxième arête interne 14B par rapport au deuxième axe de symétrie Y.

De part et d'autre la première arête interne 14A, la paroi 12 comprend deux portions adjacentes 12AA, 12AB, chaque portion adjacente 12AA, 12AB comportant une face interne 16A au conduit 10. Les faces internes 16A des deux portions adjacentes 12AA, 12AB sont symétriques par rapport à la première arête interne 14A et par rapport au premier axe de symétrie X.

De même, de part et d'autre de la deuxième arête interne 14B, la paroi 12 comprend deux portions adjacentes 12BA, 12BB, chaque portion adjacente 12BA, 12BB comportant une face interne 16B au conduit 10. Les faces internes 16B des deux portions adjacentes 12BA, 12BB sont symétriques par rapport à la deuxième arête interne 14B et par rapport au premier axe de symétrie X.

Dans le mode de réalisation de la figure 1, chaque portion adjacente 12AA, 12AB à la première arête interne 14A, en particulier la face interne 16A, forme avec le deuxième axe de symétrie un angle α qui est supérieur ou égal à 0°, de préférence supérieur ou égal à 10°, de préférence supérieur ou égal à 20°, de préférence supérieur ou égal à 30, encore plus de préférence supérieur ou égal à 40° et inférieur ou égal à 50°, de préférence inférieur ou égal à 45°. Il en va de même des portions adjacentes 12BA, 12BB à la deuxième arête interne 14B, en particulier les faces internes 16B. Dans le mode de réalisation de la figure 1, l'angle α est égal à 40°.

Dans le mode de réalisation de la figure 1, une portion de paroi comprenant la première arête interne 14A présente une épaisseur E14 mesurée selon le premier axe de symétrie X. Chaque portion adjacente 12AA, 12AB présente une épaisseur E12. L'épaisseur E12 est mesurée selon une direction perpendiculaire à la paroi 12.

Dans le mode de réalisation de la figure 1, l'épaisseur E14 de la portion de paroi comprenant la première arête interne 14A et l'épaisseur E12 des deux portions adjacentes 12AA, 12AB à la première arête interne 14A sont égales.

Dans le mode de réalisation de la figure 1, une portion de paroi comprenant la deuxième arête interne 14B présente une épaisseur E14 mesurée selon le premier axe de symétrie X. Chaque portion adjacente 12BA, 12BB présente une épaisseur E12. L'épaisseur E12 est mesurée selon une direction perpendiculaire à la paroi 12.

Dans le mode de réalisation de la figure 1, l'épaisseur E14 de la portion de paroi comprenant la deuxième arête interne 14B et l'épaisseur E12 des deux portions adjacentes 12BA, 12BB à la deuxième arête interne 14B sont égales.

De plus, dans le mode de réalisation de la figure 1, l'épaisseur E14 de la portion de paroi comprenant la première arête interne 14A et l'épaisseur E14 de la portion de paroi comprenant la deuxième arête interne 14B sont égales. Aussi, l'épaisseur E14 de la portion de paroi comprenant la première arête interne 14A et de la portion de paroi comprenant la deuxième arête interne 14B est égale à l'épaisseur E12 des portions adjacentes 12AA, 12AB à la première arête interne 14A et des portions adjacentes 12BA, 12BB à la deuxième arête interne 14B.

Dans ce qui suit, les éléments communs aux différents modes de réalisation sont identifiés par les mêmes références numériques.

Le mode de réalisation de la figure 2 est similaire au mode de réalisation de la figure 1. Le mode de réalisation de la figure 2 diffère notamment en ce que l'angle α entre les portions adjacentes et le deuxième axe de symétrie Y est égal à 60° et le rayon de courbure R de la première et de la deuxième arête interne 14A, 14B est égal à 2 mm.

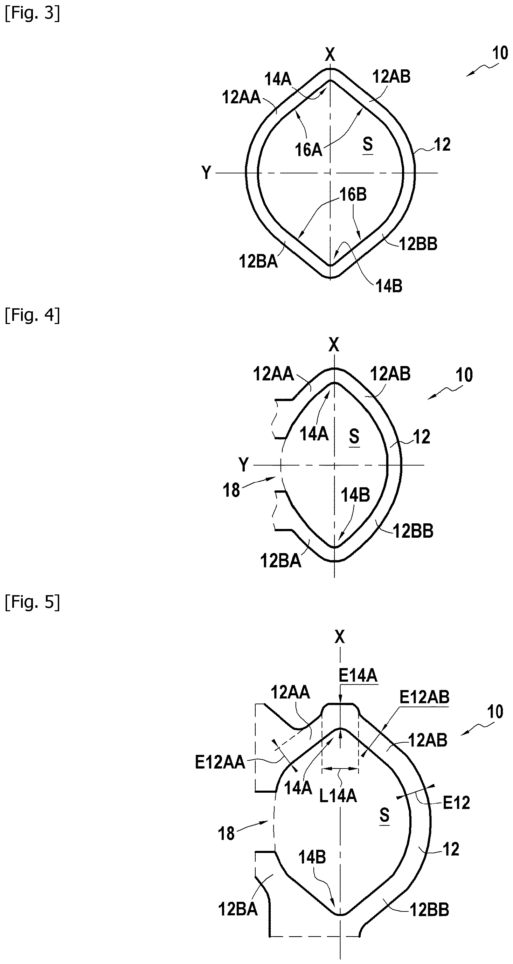

Le mode de réalisation de la figure 3 est similaire au mode de réalisation de la figure 1. Le mode de réalisation de la figure 3 diffère notamment en ce que la taille de la section interne S et l'épaisseur de la paroi 12 sont différentes.

Le mode de réalisation de la figure 4 est similaire au mode de réalisation de la figure 1. Le mode de réalisation de la figure 4 diffère notamment en ce que la paroi 12 n'est pas continue en section et présente une ouverture 18.

Bien que le conduit 10 présente en section une ouverture 18 et que la forme externe de la première arête interne 14A diffère de la forme externe de la deuxième arête interne 14B, on peut définir le premier axe de symétrie X et le deuxième axe de symétrie Y de la section interne S de la paroi 12, délimitée par les traits discontinus sur la figure 4.

La première arête interne 14A est opposé à la deuxième arête interne 14B par rapport au deuxième axe de symétrie Y de la paroi 12 en section. Le rayon de courbure R de la première et de la deuxième arête interne 14A, 14B est égal à 2 mm.

Le mode de réalisation de la figure 5 est similaire au mode de réalisation de la figure 4. Le mode de réalisation de la figure 5 diffère notamment en ce que la portion de paroi comprenant la deuxième arête interne 14B présente une forme externe au conduit 10 qui est différente de la forme externe de la portion de paroi comprenant la première arête interne 14A et en ce que l'épaisseur E14A de la portion de paroi comprenant la première arête interne 14A est supérieure à l'épaisseur E12AA, E12AB des portions adjacentes 12AA, 12AB à la première arête interne 14A.

Dans le mode de réalisation de la figure 5, l'épaisseur E14A de la portion de paroi comprenant la première arête interne 14A est égale à 8 mm et l'épaisseur E12AA, E12AB des portions adjacentes 12AA, 12AB à la première arête interne 14A est égale à 6 mm. Le rayon de courbure R de la première et de la deuxième arête interne 14A, 14B est égal à 2 mm. La portion de paroi comprenant la première arête interne 14A présente une largeur L14A, mesurée perpendiculairement à l'épaisseur E14A de la portion de paroi comprenant la première arête interne 14A et à la moitié de l'épaisseur E14A de la portion de paroi comprenant la première arête interne 14A, égale à 8 mm.

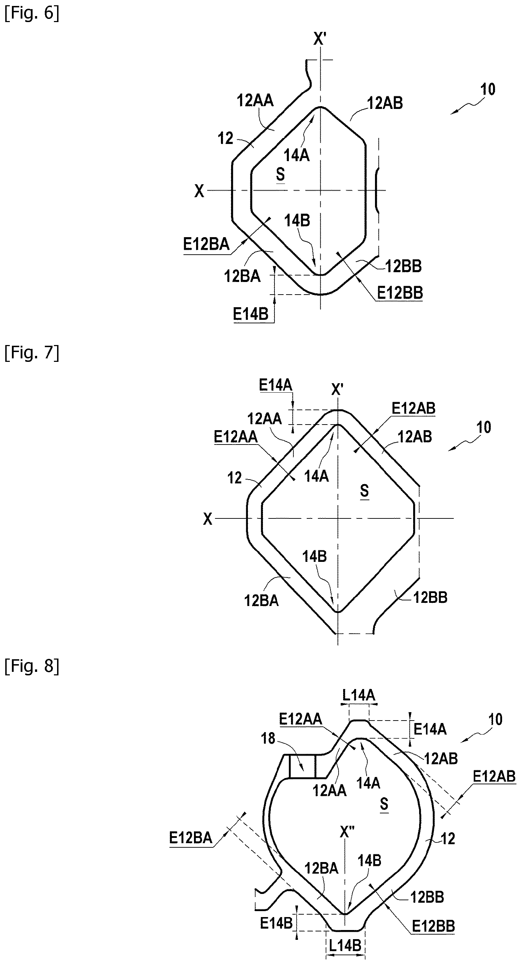

Le mode de réalisation de la figure 6 est similaire au mode de réalisation de la figure 1. Le mode de réalisation de la figure 6 diffère notamment en ce qu'il ne comprend pas de premier axe de symétrie X. La première arête interne 14A et la deuxième arête interne 14B sont opposées l'une à l'autre par rapport à l'axe de symétrie Y de la section interne S de la paroi 12 du conduit 10. La première arête interne 14A présente un axe de symétrie X' des portions adjacentes 12AA, 12AB à la première arête interne 14A et la deuxième arête interne 14B présente un axe de symétrie X' des portions adjacentes 12BA, 12BB à la deuxième arête interne 14B. L'axe de symétrie X' de la première arête interne 14A est confondu avec l'axe de symétrie X' de la deuxième arête interne 14B. Toutefois, dans le mode de réalisation de la figure 6, l'axe de symétrie X' n'est pas un axe de symétrie de la section interne S.

Dans le mode de réalisation de la figure 6, le rayon de courbure R de la première et de la deuxième arête interne 14A, 14B est égal à 3 mm et l'épaisseur E14B de la portion de paroi comprenant la deuxième arête interne 14B est égale à 8 mm. L'épaisseur E12BA de la portion adjacentes 12BA est égale à l'épaisseur E12BB de la portion adjacente 12BB, ces épaisseurs sont égales à l'épaisseur E14B de la portion de paroi comprenant la deuxième arête interne 14B.

Le mode de réalisation de la figure 7 est similaire au mode de réalisation de la figure 6. Le mode de réalisation de la figure 7 diffère notamment en ce que l'épaisseur E14A de la première arête interne 14A est égale à 6 mm.

Le mode de réalisation de la figure 8 est similaire au mode de réalisation de la figure 1. Le mode de réalisation de la figure 8 diffère notamment en ce qu'il ne comprend pas de premier axe de symétrie X et de deuxième axe de symétrie Y. La deuxième arête interne 14B présente un axe de symétrie X" des portions adjacentes 12BA, 12BB à la deuxième arête interne 14B. La première arête interne 14A ne présente pas d'axe de symétrie des portions adjacentes 12AA, 12AB.

On peut dire que la première arête interne 14A est opposée à la deuxième arête interne 14B.

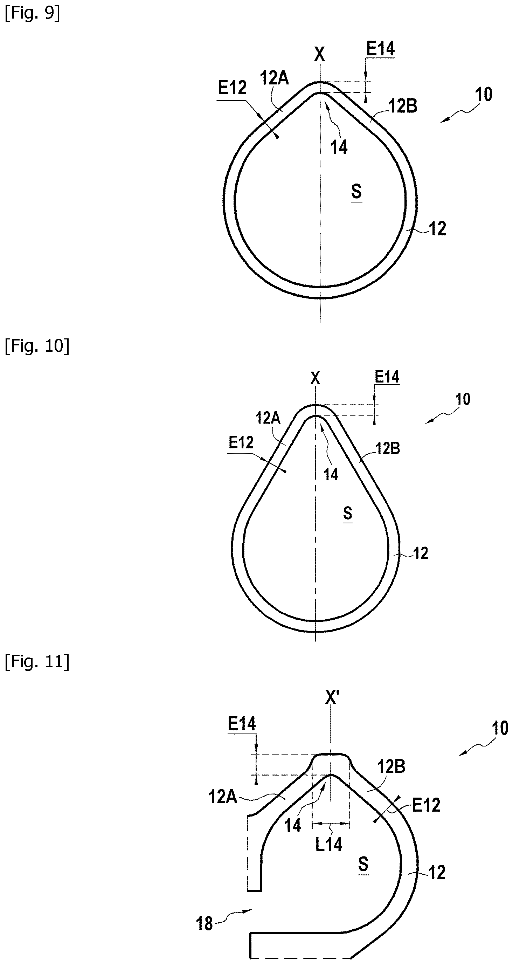

Le mode de réalisation de la figure 9 est similaire au mode de réalisation de la figure 1. Le mode de réalisation de la figure 9 diffère notamment en ce que le conduit comprend une arête interne 14.

Dans le mode de réalisation de la figure 9, le rayon de courbure R de l'arête interne 14 est égal à 2 mm et l'épaisseur E14 de la portion de paroi comprenant l'arête interne 14 est égale à 5 mm.

Le mode de réalisation de la figure 10 est similaire au mode de réalisation de la figure 9. Le mode de réalisation de la figure 10 diffère notamment en ce que la forme générale de la section interne S est différente.

Dans le mode de réalisation de la figure 10, le rayon de courbure R de l'arête interne 14 est égal à 4 mm et l'épaisseur E14 de la portion de paroi comprenant l'arête interne 14 est égale à 6 mm.

Le mode de réalisation de la figure 11 est similaire au mode de réalisation de la figure 1. Le mode de réalisation de la figure 11 diffère notamment en ce que le conduit comprend une arête interne 14, une ouverture 18 et en ce que l'axe de symétrie X' des portions adjacentes 12A, 12B à l'arête interne 14 n'est pas un axe de symétrie de la section interne S.

Dans le mode de réalisation de la figure 11, le rayon de courbure R de l'arête interne 14 est égal à 3 mm, l'épaisseur E14 de la portion de paroi comprenant l'arête interne 14 est égale à 8 mm et la largeur L14 de la portion de paroi comprenant l'arête interne 14 est égale à 10 mm. L'épaisseur E12 des portions de paroi adjacentes à l'arête interne est égale à 6 mm.

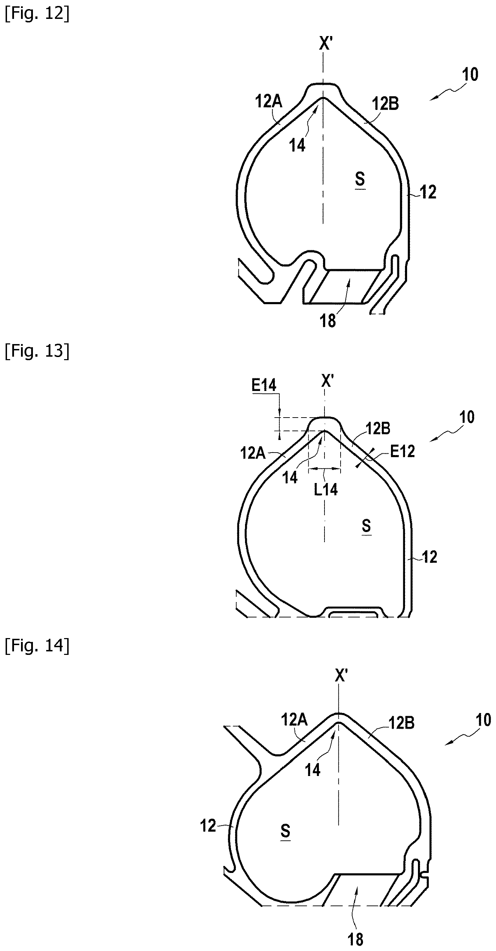

Le mode de réalisation de la figure 12 est similaire au mode de réalisation de la figure 11. Le mode de réalisation de la figure 12 diffère notamment en ce que l'ouverture 18 est disposée différemment dans la paroi 12.

Le mode de réalisation de la figure 13 est similaire au mode de réalisation de la figure 11. Le mode de réalisation de la figure 13 diffère notamment en ce que la section ne comporte pas d'ouverture 18.

Dans le mode de réalisation de la figure 13, l'épaisseur E12 de la paroi adjacente 12A, 12B est égal à 4 mm, l'épaisseur E14 de la portion de paroi comprenant l'arête interne 14 est égale à 7 mm et la largeur L14 de la portion de paroi comprenant l'arête interne 14 est égale à 15 mm. Le rayon de courbure R de l'arête interne 14 est égal à 2 mm. Aussi, l'épaisseur E14 de la portion de paroi comprenant l'arête interne 14 est égale à 1,75 fois l'épaisseur E12 des portions de paroi adjacentes à l'arête interne et la largeur L14 de la portion de paroi comprenant l'arête interne 14 est égale à 2,14 fois l'épaisseur E14 de la portion de paroi comprenant l'arête interne 14.

Le mode de réalisation de la figure 14 est similaire au mode de réalisation de la figure 12. Le mode de réalisation de la figure 14 diffère notamment en ce que l'épaisseur E14 de la portion de paroi comprenant l'arête interne 14 est égale à l'épaisseur E12 de la paroi adjacente 12A, 12B.

Dans le mode de réalisation de la figure 14, l'épaisseur E12 de la paroi adjacente 12A, 12B et l'épaisseur E14 de la portion de paroi comprenant l'arête interne 14 sont égales à 6 mm. Le rayon de courbure R de l'arête interne 14 est égal à 2 mm.

Le conduit 10 des différents modes de réalisation présentés sur les figures 1 à 14 peut être réalisé par fabrication additive par fusion laser sur lit de poudre.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Conduit (10) pour turbomachine, le conduit (10) étant une volute de sortie de pompe ou une volute d'entrée de turbine à gaz, **caractérisé en ce que** le conduit (10) comprend une paroi (12) comportant une arête interne (14 ; 14A, 14B) présentant en section un rayon de courbure (R) supérieur ou égal à 0,5 mm, de préférence supérieur ou égal à 1 mm, et inférieur ou égal à 5 mm, de préférence inférieur ou égal à 4 mm,.

2. Conduit (10) selon la revendication 1, dans lequel la paroi (12) comprend une portion adjacente (12A, 12B ; 12AA, 12AB, 12BA, 12BB) à l'arête interne (14 ; 14A, 14B) présentant une épaisseur (E12) et une portion de paroi comprenant l'arête interne présente une épaisseur (E14 ; E14A) supérieure à l'épaisseur (E12) de la portion adjacente (12A, 12B ; 12AA, 12AB, 12BA, 12BB) à l'arête interne.

3. Conduit (10) selon la revendication 2, dans lequel l'épaisseur (E14 ; E14A) de la portion de paroi comprenant l'arête interne est supérieure ou égale à 1,1 fois l'épaisseur (E12) de la portion adjacente (12A, 12B ; 12AA, 12AB, 12BA, 12BB) à l'arête interne, de préférence supérieure ou égale à 1,5 fois l'épaisseur de la portion adjacente (12A, 12B ; 12AA, 12AB, 12BA, 12BB) à l'arête interne.

4. Conduit (10) selon la revendication 3, dans lequel l'épaisseur (E14, E14A) de la portion de paroi comprenant l'arête interne est inférieure ou égale à 3 fois l'épaisseur de la portion adjacente (12A, 12B ; 12AA, 12AB, 12BA, 12BB) à l'arête interne, de préférence inférieure ou égale à 2,5 fois l'épaisseur de la portion adjacente (12A, 12B ; 12AA, 12AB, 12BA, 12BB) à l'arête interne.

5. Conduit (10) selon l'une quelconque des revendications 1 à 4, dans lequel la paroi (12) comprend deux portions adjacentes (12A, 12B ; 12AA, 12AB, 12BA, 12BB) à l'arête interne (14 ; 14A, 14B), disposées de part et d'autre de l'arête interne (14 ; 14A, 14B), chaque portion (12A, 12B ; 12AA, 12AB, 12BA, 12BB) comportant une face interne (16 ; 16A, 16B), les faces internes (16 ; 16A, 16B) des deux portions adjacentes (12A, 12B ; 12AA, 12AB, 12BA, 12BB) étant symétriques par rapport à l'arête interne (14 ; 14A, 14B).

6. Conduit (10) selon l'une quelconque des revendications 1 à 5, comprenant deux arêtes internes (14A, 14B) opposées l'une à l'autre.

7. Conduit (10) selon l'une quelconque des revendications 1 à 6, présentant en section un axe de symétrie (X).

8. Conduit (10) selon l'une quelconque des revendications 1 à 7, présentant en section deux axes de symétrie (X, Y).

## Patentansprüche

1. Leitung (10) für eine Turbomaschine, wobei die Leitung (10) eine Pumpenauslassspirale oder eine Gasturbineneinlassspirale ist, **dadurch gekennzeichnet, dass** die Leitung (10) eine Wand (12) umfasst, die eine Innenkante (14; 14A, 14B) umfasst, welche im Querschnitt einen Krümmungsradius (R) größer als oder gleich 0,5 mm, vorzugsweise größer als oder gleich 1 mm, und kleiner als oder gleich 5 mm, vorzugsweise kleiner als oder gleich 4 mm aufweist.

2. Leitung (10) nach Anspruch 1, bei der die Wand (12) einen an die Innenkante (14; 14A, 14B) angrenzenden Abschnitt (12A, 12B; 12AA, 12AB, 12BA, 12BB) umfasst, welcher eine Dicke (E12) aufweist, und ein Abschnitt der Wand, der die Innenkante umfasst, eine Dicke (E14; E14A) aufweist, die größer als die Dicke (E12) des an die Innenkante angrenzenden Abschnitts (12A, 12B; 12AA, 12AB, 12BA, 12BB) ist.

3. Leitung (10) nach Anspruch 2, bei der die Dicke (E14; E14A) des Wandabschnitts, welcher die Innenkante umfasst, größer als oder gleich dem 1,1-fachen der Dicke (E12) des an die Innenkante angrenzenden Abschnitts (12A, 12B; 12AA, 12AB, 12BA, 12BB), vorzugsweise größer als oder gleich dem 1,5-fachen der Dicke des an die Innenkante angrenzenden Abschnitts (12A, 12B; 12AA, 12AB, 12BA, 12BB) ist.

4. Leitung (10) nach Anspruch 3, bei der die Dicke (E14, E14A) des Wandabschnitts, welcher die Innenkante umfasst, kleiner als oder gleich dem 3-fachen der Dicke des an die Innenkante angrenzenden Abschnitts (12A, 12B; 12AA, 12AB, 12BA, 12BB), vorzugsweise kleiner als oder gleich dem 2,5-fachen der Dicke des an die Innenkante angrenzenden Abschnitts (12A, 12B; 12AA, 12AB, 12BA, 12BB) ist.

5. Leitung (10) nach einem der Ansprüche 1 bis 4, bei der die Wand (12) zwei an die Innenkante (14; 14A, 14B) angrenzende Abschnitte (12A, 12B; 12AA, 12AB, 12BA, 12BB) umfasst, die auf beiden Seiten der Innenkante (14; 14A, 14B) angeordnet sind, wobei jeder Abschnitt (12A, 12B; 12AA, 12AB, 12BA, 12BB) eine Innenseite (16; 16A, 16B) umfasst, wobei die Innenseiten (16; 16A, 16B) der beiden angrenzenden Abschnitte (12A, 12B; 12AA, 12AB, 12BA, 12BB) in Bezug auf die Innenkante (14; 14A, 14B) symmetrisch sind.

6. Leitung (10) nach einem der Ansprüche 1 bis 5, die zwei einander gegenüberliegende Innenkanten (14A, 14B) umfasst.

7. Leitung (10) nach einem der Ansprüche 1 bis 6, die im Querschnitt eine Symmetrieachse (X) aufweist.

8. Leitung (10) nach einem der Ansprüche 1 bis 7, die im Querschnitt zwei Symmetrieachsen (X) aufweist.

## Claims

1. A pipe (10) for a turbine engine, the pipe (10) being a pump outlet volute or a gas turbine inlet volute, **characterized in that** the pipe (10) comprises a wall (12) including an internal edge (14; 14A, 14B) having in section a radius of curvature (R) greater than or equal to 0.5 mm, preferably greater than or equal to 1 mm, and less than or equal to 5 mm, preferably less than or equal to 4 mm.

2. The pipe (10) according to claim 1, wherein the wall (12) comprises a portion (12A, 12B; 12AA, 12AB, 12BA, 12BB) adjacent to the internal edge (14; 14A, 14B) having a thickness (E12) and a wall portion comprising the internal edge has a thickness (E14; E14A) greater than the thickness (E12) of the portion (12A, 12B; 12AA, 12AB, 12BA, 12BB) adjacent to the internal edge.

3. The pipe (10) according to claim 2, wherein the thickness (E14; E14A) of the wall portion comprising the internal edge is greater than or equal to 1.1 times the thickness (E12) of the portion (12A, 12B; 12AA, 12AB, 12BA, 12BB) adjacent to the internal edge, preferably greater than or equal to 1.5 times the thickness of the portion (12A, 12B; 12AA, 12AB, 12BA, 12BB) adjacent to the internal edge.

4. The pipe (10) according to claim 3, wherein the thickness (E14, E14A) of the wall portion comprising the internal edge is less than or equal to 3 times the thickness of the portion (12A, 12B; 12AA, 12AB, 12BA, 12BB) adjacent to the internal edge, preferably less than or equal to 2.5 times the thickness of the portion (12A, 12B; 12AA, 12AB, 12BA, 12BB) adjacent to the internal edge.

5. The pipe (10) according to any one of claims 1 to 4, wherein the wall (12) comprises two portions (12A, 12B; 12AA, 12AB, 12BA, 12BB) adjacent to the internal edge (14; 14A, 14B), disposed on either side of the internal edge (14; 14A, 14B), each portion (12A, 12B; 12AA, 12AB, 12BA, 12BB) including an internal face (16; 16A, 16B), the internal faces (16; 16A, 16B) of the two adjacent portions (12A, 12B; 12AA, 12AB, 12BA, 12BB) being symmetrical with respect to the internal edge (14; 14A, 14B).

6. The pipe (10) according to any one of claims 1 to 5, comprising two internal edges (14A, 14B) opposite to each other.

7. The pipe (10) according to any one of claims 1 to 6, having in section an axis of symmetry (X).

8. The pipe (10) according to any one of claims 1 to 7, having in section two axes of symmetry (X, Y).
